# EUROPEAN PATENT APPLICATION

(11) **EP 4 531 196 A1**
(43) Date of publication of application: **02.04.2025**
(21) Application number: 23920174.2
(22) Date of filing: 28.12.2023
(51) Int. Cl.: H01M 50/521, H01M 50/595, H01M 50/588, H01M 50/526, C08L 83/04, H01M 10/42

(54) **BUSBAR ASSEMBLY AND BATTERY PACK INCLUDING SAME**

(30) Priority: 30.01.2023 KR 20230011440
(71) Applicant: LG Energy Solution, Ltd., Seoul 07335 (KR)
(72) Inventor: YUN, Sunwoo, Daejeon 34122 (KR)
(74) Representative: Plasseraud IP
(86) International application number: PCT/KR2023/021860
(87) International publication number: WO 2024/162625

(57) **Abstract**

A busbar assembly according to an embodiment of the present disclosure includes: a busbar for guiding electrical connection inside the battery pack; a fire resistant silicone layer that surrounds an outer peripheral surface of the busbar; and a glass fiber tape that surrounds the fire resistant silicone layer, wherein the glass fiber tape is formed with a plurality of through holes.

## Description

### [TECHNICAL FIELD]

### Cross Citation with Related Application(s)

This application claims the benefit of Korean Patent Application No. 10-2023-0011440 filed on January 30, 2023 with the Korean Intellectual Property Office, the disclosure of which is incorporated herein by reference in its entirety.

The present disclosure relates to a busbar assembly and a battery pack including the same, and more specifically, to a busbar assembly having an improved fire resistance and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery generally uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are arranged with a separator interposed between them, and an exterior material or a battery case which hermetically houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminate sheet.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU (battery disconnect unit), a BMS (battery management system), and a cooling system to form a battery pack.

In the battery pack configured to gather a plurality of battery modules, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charging and discharging. When the heat dissipation of battery cells is not properly performed or thermal runaway phenomenon occurs in a battery cell, the possibility of explosion or ignition increases.

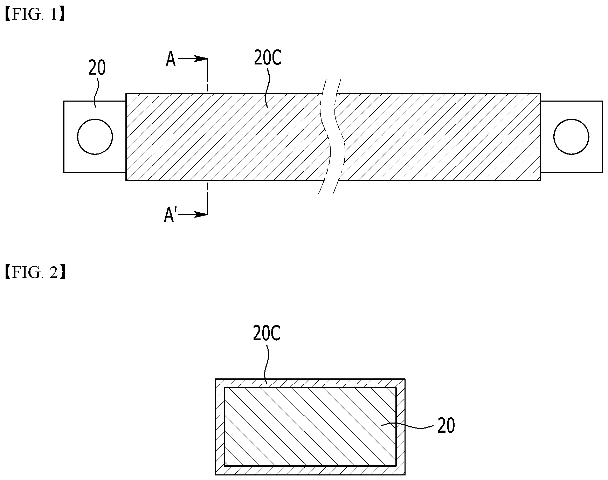

Meanwhile, a busbar connected to the battery module is provided inside the battery pack. FIG. 1 is a plan view showing a conventional busbar, and FIG. 2 is a cross-sectional view showing a cross section taken along the cutting line A-A' in FIG. 1.

Referring to FIGS. 1 and 2, a conventional busbar 20 is a rod-shaped metal member that extends along the longitudinal direction, and a hole for connecting with a terminal busbar of a battery module may be formed at both end parts of the busbar 20. Such a busbar 20 is configured to be in charge of HV (High voltage) connection in the battery pack. The HV connection means a connection that serves as a power source to supply electric power, and the busbar 20 is configured to guide electrical connection of the battery module, and generally includes a metal material having excellent electrical conductivity. As an example, the busbar 20 may include a copper (Cu) material.

The covering member 20C can surround such a busbar 20. The covering member 20C may include a material that is electrically insulating, and for example, it may include a silicone material or an epoxy material. Since the covering member 20C surrounds the busbar 20 through which a high current flows, it is possible to prevent the busbar 20 from coming into contact with other electrical equipment or conductive members in addition to the terminal busbar of the battery module, thereby interrupting generation of short circuits.

In recent years, battery packs have been required to have equipment in which flames are not ejected to the outside of the battery pack even if a fire occurs inside the battery pack. Since the flame generated inside the battery pack has a very high temperature of approximately 1000°C, the covering member 20C surrounding the busbar 20 may melt, so that the busbar 20 may be exposed. If the exposed busbar 20 comes into contact with another electrical component or conductive member to cause a short circuit, the internal flame may further spread, and the flame may propagate to the outside of the battery pack. This could ultimately lead to an explosion of the battery pack or the vehicle equipped with the battery pack.

Therefore, there is a need to develop a technology for a busbar assembly that can maintain electrical insulation properties even if a flame occurs inside the battery pack.

### [DETAILED DESCRIPTION OF THE INVENTION]

### [Technical Problem]

It is an object of the present disclosure to provide a busbar assembly that can maintain electrical insulation properties without being melted even if a flame occurs inside the battery pack, and a battery pack including the same.

However, the technical problems to be solved by embodiments of the present disclosure are not limited to the above-mentioned problems, and can be variously expanded within the scope of the technical idea included in the present disclosure.

### [Technical Solution]

According to one embodiment of the present disclosure, there is provided a busbar assembly comprising: a busbar for guiding electrical connection inside the battery pack; a fire resistant silicone layer that surrounds an outer peripheral surface of the busbar; and a glass fiber tape that surrounds the fire resistant silicone layer, wherein the glass fiber tape is formed with a plurality of through holes.

The glass fiber tape may be wound multiple times along the longitudinal direction of the busbar so as to form layers overlapping in at least partial areas.

The glass fiber tape may be wound obliquely multiple times around the fire resistant silicone layer so that partial areas between any one layer in the glass fiber tape and the other layer adjacent thereto overlap with each other.

At least one of the through holes formed in any one layer of the glass fiber tape may be configured such that the opened portion thereof at least partially overlap with at least one of the through holes formed in adjacent other layers of the glass fiber tape.

The glass fiber tape may be a rectangular tape having a long side and a short side, and the glass fiber tape may surround the fire resistant silicone layer along the long side of the glass fiber tape.

The through holes may include a vertical through hole formed so as to extend along a direction parallel to the long side of the glass fiber tape and a horizontal through hole formed so as to extend along a direction parallel to the short side of the glass fiber tape.

Both the vertical through hole and the horizontal through hole may be configured in plural numbers, and each of the vertical through holes and the horizontal through holes may be arranged along the long side of the glass fiber tape.

The glass fiber tape may be wound multiple times along the longitudinal direction of the busbar so as to form layers overlapping in at least partial areas, and at least one of the vertical through hole formed in any one layer of the glass fiber tape, and at least one of the horizontal through holes formed in adjacent other layers of the glass fiber tape may be configured such that the opened portions thereof at least partially overlap with each other.

The fire resistant silicone layer may include a silicone material that is ceramified at high temperature.

According to another embodiment of the present disclosure, there is provided a battery pack comprising: at least one busbar assembly as described above; battery modules; a BDU (battery disconnect unit) module that controls electrical connection of the battery modules; and a BMS (battery management system) module that monitors and controls the operation of the battery module. The at least one busbar assembly electrically connects at least one of between the battery modules, between the battery module and the BDU module, between the battery module and the BMS module, or between the BDU module and the BMS module.

### [Advantageous Effects]

According to embodiments of the present disclosure, a fire resistant silicone layer that is ceramified at high heat or flame, and a glass fiber tape that surrounds the fire resistant silicone layer are provided in the busbar assembly, so that the electrical insulation properties of the busbar assembly can be maintained even if a flame occurs inside the battery pack.

In addition, the glass fiber tape is formed with a plurality of through holes, so that gases generated when a busbar assembly is exposed to flame can be quickly discharged.

Effects obtainable from the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is a plan view showing a conventional busbar.
FIG. 2 is a cross-sectional view showing a cross section taken along the cutting line A-A' in FIG. 1.
FIG. 3 is a plan view showing a battery pack according to an embodiment of the present disclosure.
FIG. 4 is a perspective view showing one of the battery modules included in the battery pack of FIG. 3.
FIG. 5 is a partial perspective view showing a state in which the module frame and the end plate are removed in the battery module of FIG. 4.
FIG. 6 is a plan view showing a busbar and a fire resistant silicone layer included in a busbar assembly according to an embodiment of the present disclosure.
FIG. 7 is a cross-sectional view showing a cross section taken along the cutting line B-B' of FIG. 6.
FIG. 8 is a plan view showing a glass fiber tape according to an embodiment of the present disclosure.
FIGS. 9 and 10 are plan views showing a state in which a fire fiber tape of FIG. 8 is wound around the busbar assembly of FIG. 6.
FIG. 11 is a plan view showing a glass fiber tape according to a modified embodiment of the present disclosure.
FIGS. 12 and 13 are plan views showing a state in which a fire fiber tape of FIG. 11 is wound around the busbar assembly of FIG. 6.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

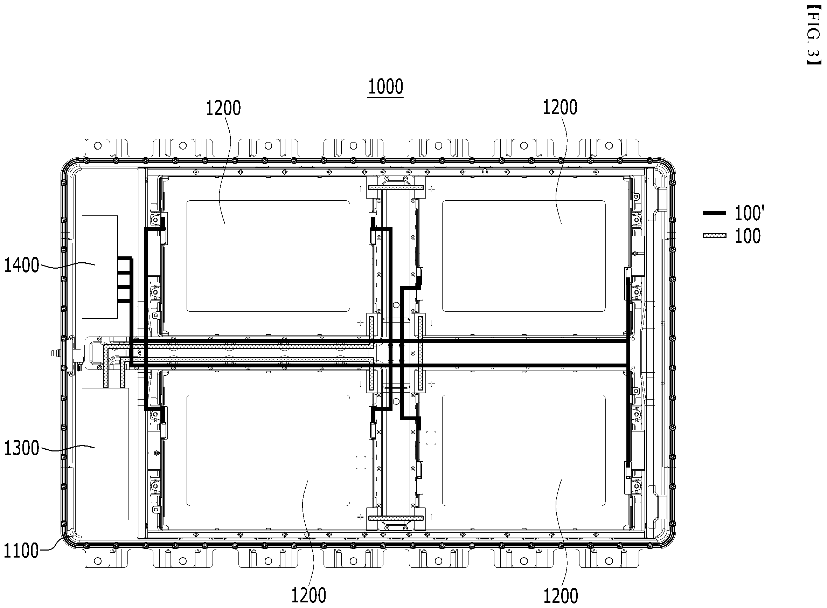

FIG. 3 is a plan view showing a battery pack according to an embodiment of the present disclosure.

Referring to FIG. 3, the battery pack 1000 according to one embodiment of the present disclosure includes a busbar assembly 100; battery modules 1200, a BDU (Battery Disconnect Unit) module 1300 for controlling electrical connection of the battery modules 1200, and a BMS (Battery Management System) module 1400 that monitors and controls the operation of the battery module 1200. At least one busbar assembly 100 according to the present embodiment electrically connects at least one of between the battery modules 1200, between the battery module 1200 and the BDU module 1300, between the battery module 1200 and the BMS module 1400, or between the BDU module 1300 and the BMS module 1400. Specifically, a plurality of battery modules 1200 may be housed in the pack frame 1100, and electrical connection between the battery modules 1200 or electrical connection between the battery module 1200 and the BDU module 1300 may be made by the busbar assembly 100. That is, the busbar assembly 100 according to the present embodiment can be in charge of HV (High voltage) connection. Here, the HV connection is a power connection that serves to supply electric power requiring high voltage, and refers to a connection between battery cells or a connection between battery modules.

Meanwhile, the BDU module 1300 is a member for controlling electrical connection of the battery module 1200, and can cut off power between the power converter and the battery module 1200. When a condition occurs in which the current exceeds the set range, the BDU module 1300 can cut off electric power to the battery pack 1000 to ensure safety of the battery pack 1000.

Meanwhile, the LV connection member 100' according to the present embodiment may be in charge of electrical connection between the battery module 1200 and the BMS module 1400. The electrical connection herein is a LV (low voltage) connection, which means a sensing connection for detecting and controlling the voltage and temperature of the battery module 1200. Specifically, sensors, and the like are arranged inside the battery module 1200, and real-time temperature information or voltage information of the battery module 1200 is transmitted to a BMS module 1400 via the LV connection member 100'. It is possible to monitor and control the real-time operating status of the battery module 1200 via the BMS module 1400. Although not specifically illustrated, an HV current sensor may be integrated into the BMS module 1400. In this case, the busbar assembly according to the present embodiment may be in charge of electrical connection between the battery module 1200 and the BMS module 1400 or between the BDU module 1300 and the BMS module 1400.

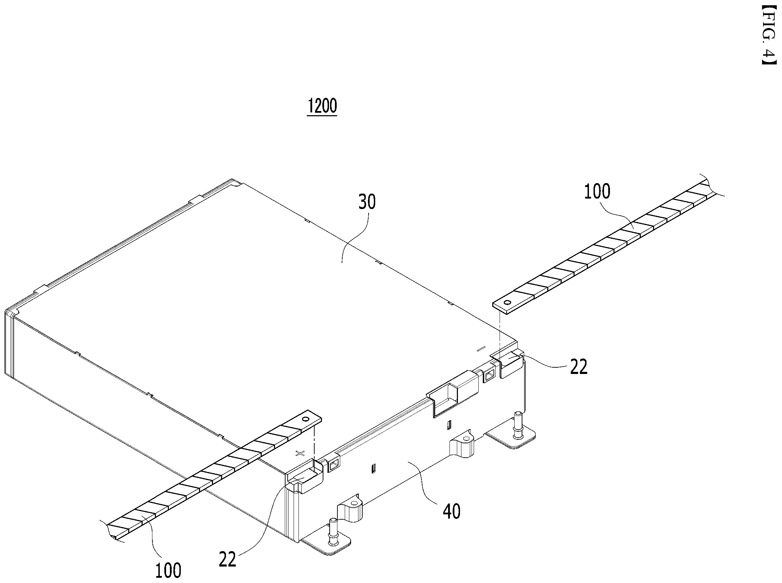

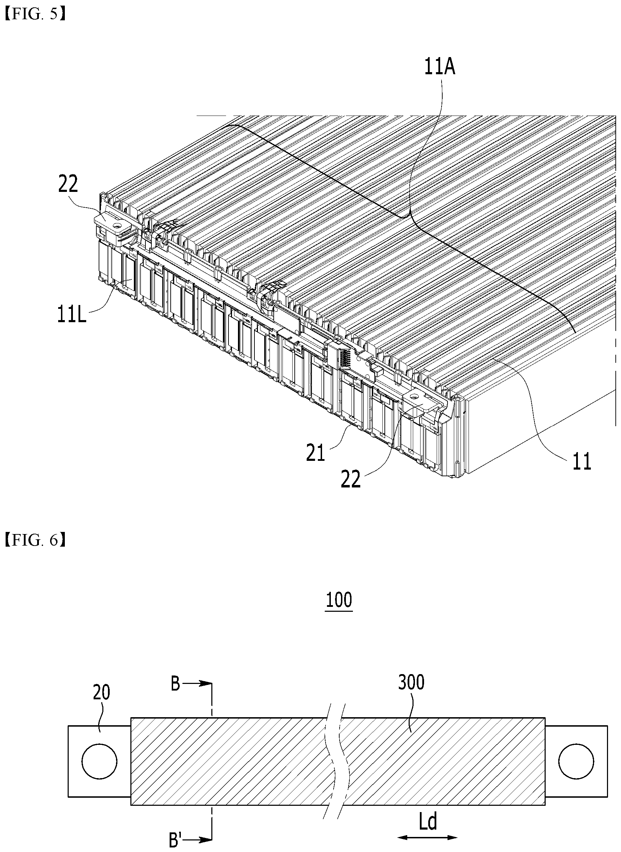

Next, the battery module 1200 according to the present embodiment will be described with reference to FIGS. 4 and 5. In this regard, the battery module 1200 described below has one exemplary structure of a battery module including a plurality of battery cells 11, and various types of battery modules including a plurality of battery cells can be applied.

FIG. 4 is a perspective view showing one of the battery modules included in the battery pack of FIG. 3. FIG. 5 is a partial perspective view showing a state in which the module frame and the end plate are removed in the battery module of FIG. 4.

Referring to FIGS. 4 and 5, the battery module 1200 according to the present embodiment may include a battery cell stack 11A in which a plurality of battery cells 11 are stacked. The battery cell stack 11A is illustrated in FIG. 5. Such a battery cell stack 11A can be housed in the module frame 30 and the end plate 40.

The battery cell 11 may be a pouch-type battery cell. Such a pouch-type battery cell may be formed by housing an electrode assembly in a pouch case made of a laminate sheet including a resin layer and a metal layer, and then fusing the outer peripheral part of the pouch case. Such battery cells 11 may be formed in a rectangular sheet structure. The electrode lead 11L connected to the electrode assembly protrudes to an outside of the pouch case, wherein the electrode leads 11L of each battery cell 11 may be electrically connected to each other via the lead busbar 21. On the other hand, at least one electrode lead 11L may be connected to the terminal busbar 22. A portion of the terminal busbar 22 may be exposed to the outside of the battery module 1200 as illustrated in FIG. 4. Both the lead busbar 21 and the terminal busbar 22 may include a metal material with excellent electrical conductivity.

The busbar assembly 100 according to the present embodiment is electrically connected to such a terminal busbar 22, so that the above-mentioned HV connection can be achieved. That is, the battery module 1200 may be electrically connected to the other battery module 1200, BDU module 1300, or BMS module 1400 via the busbar assembly 100 connected to the terminal busbar 22.

As mentioned above, the battery cells and battery modules described in FIGS. 4 and 5 are exemplary structures, and the types or forms of the battery cells and battery modules included in the battery pack to which the busbar assembly according to the present embodiment is applied are not particularly limited. That is, although a pouch-type battery cell was described as an example, a prismatic battery cell or a cylindrical battery cell can also be applied to the battery module according to an embodiment of the present disclosure. In addition, a battery module in which battery cells are housed in a module frame was described as an example, but a CTP (cell to pack) type battery module in which a plurality of battery cells are mounted on a battery pack without being housed in a module frame can also be applied as an example of the present disclosure.

Next, the busbar assembly according to an embodiment of the present disclosure will be described in detail with reference to FIGS. 6 to 10.

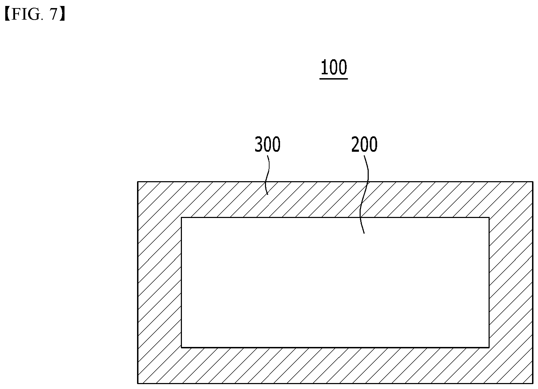

FIG. 6 is a plan view showing a busbar and a fire resistant silicone layer included in a busbar assembly according to an embodiment of the present disclosure. FIG. 7 is a cross-sectional view showing a cross section taken along the cutting line B-B' of FIG. 6.

Referring to FIGS. 6 and 7, the busbar assembly 100 according to an embodiment of the present disclosure includes a busbar 200 for guiding electrical connection inside the battery pack 1000; a fire resistant silicone layer 300 that surrounds an outer peripheral surface of the busbar 200; and a glass fiber tape that surrounds the fire resistant silicone layer 300.

The busbar 200 is configured to guide electrical connection, that is, HV connection, of the battery module, and may include a metal material with excellent electrical conductivity. As an example, the busbar 200 may include copper(Cu) material. The busbar 200 may be a metal rod extending along the longitudinal direction Ld.

The fire resistant silicone layer 300 may include a fire resistant silicone material. Specifically, the fire resistant silicone material can be molded onto the outer peripheral surface of the busbar 200, thereby forming the fire resistant silicone layer 300. This fire resistant silicone layer 300 may surround the outer peripheral surface of the busbar 200 except for partial areas of both end parts of the busbar 200 that are connected to the terminal busbar 22 (see FIG. 5). The fire resistant silicone layer 300 having electrical insulation properties functions as an insulating layer that protects the busbar 200, thereby preventing the busbar 200 from coming into contact with other electrical equipment or conductive members and causing a short circuit.

The fire resistant silicone material is a material that is ceramified when exposed to flame or high heat, unlike common silicone materials that are burn when exposed to flame or at high temperatures. The fire resistant silicone material may be a silicone material that is ceramified when the temperature exceeds a certain temperature. The fire resistant silicone material may include silicone polymer and silica. The applied silicone polymer may be a polysiloxane-based compound having a vinyl group as a functional group, and corresponds to a base material for a fire resistant silicone material. The silica may be a fumed silica, which is a reinforcing filler included in the silicone polymer. A high-purity silicone chloride (SiCl₄) compound can be produced using metallic silicone as a main raw material through reaction with hydrochloric acid and purification process, and this can be reacted with hydrogen and oxygen in a high temperature flame to obtain fumed silica. Further, the fire resistant silicone may contain platinum Pt as a catalyst.

When the fire resistant silicone material is exposed to flame or high heat, silica (SiO₂) is crosslinked together with decomposition of the silicone polymer to form a ceramic material. The fire resistant silicone layer 300 according to the present embodiment does not burn or melt out, but can be ceramified and maintain electrical insulation properties even if exposed to flame or placed in a high-temperature environment.

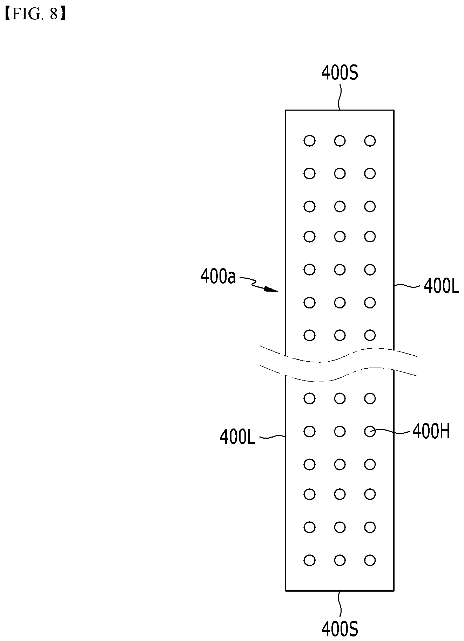

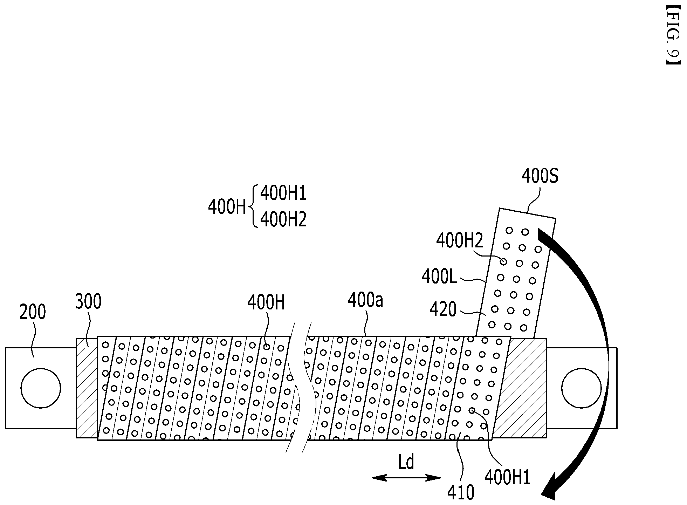

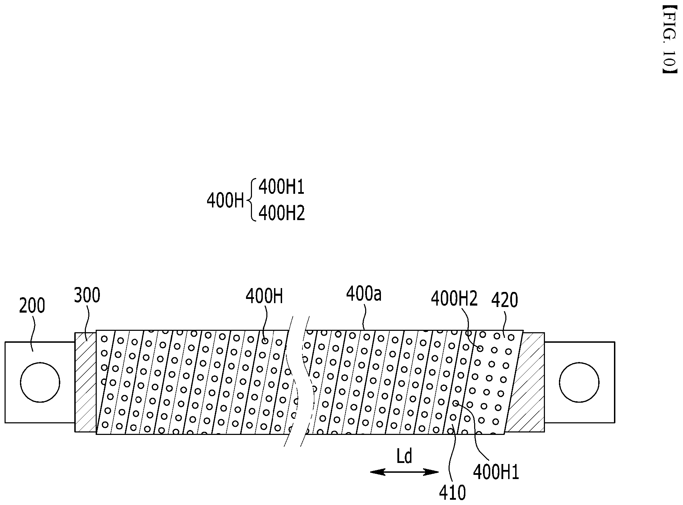

FIG. 8 is a plan view showing a glass fiber tape according to an embodiment of the present disclosure. FIGS. 9 and 10 are plan views showing a state in which a fire fiber tape of FIG. 8 is wound around the busbar assembly of FIG. 6. Specifically, FIG. 9 illustrates the state before the final portion of the glass fiber tape 400a is wound around the fire resistant silicone layer 300. FIG. 10 illustrates the state in which the final portion of the glass fiber tape 400a is completely wound around the fire resistant silicone layer 300.

Referring to FIGS. 6, 8, 9 and 10, the busbar assembly 100 according to the present embodiment includes a glass fiber tape 400a surrounding a fire resistant silicone layer 300, wherein the glass fiber tape 400a is formed with a plurality of through holes 400H. The glass fiber tape 400a may surround the outer surface of the fire resistant silicone layer 300.

The glass fiber tape 400a may include a glass fiber layer and an adhesive layer formed on one surface of the glass fiber base layer. The glass fiber layer may be a fabric containing glass fibers, and the adhesive layer may include at least one of acrylic resin or silicone resin. The glass fiber tape 400a may be a rectangular tape having a long side 400L and a short side 400S. That is, the long side 400L herein refers to a relatively long side of the rectangular tape, and the short side 400S refers to a relatively short side of the rectangular tape. Such a glass fiber tape 400a can surround the fire resistant silicone layer 300 along the long side 400L of the glass fiber tape 400a. Specifically, the glass fiber tape 400a may be wound multiple times around the fire resistant silicone layer 300 along the longitudinal direction Ld of the busbar 200 so as to form layers 410 and 420 overlapping in at least partial areas. Here, the layers 410 and 420 of the glass fiber tape 400a correspond to an interlayer structure formed by overlapping at least partial areas among the portions of the glass fiber tape 400a adjacent to each other. More specifically, the glass fiber tape 400a may be wound obliquely multiple times around the fire resistant silicone layer 300 so that partial areas between any one layer 410 of the glass fiber tape 400a and the other layer 420 adjacent thereto overlap with each other. In FIGS. 9 and 10, partial areas of both end parts of the fire resistant silicone layer 300 are expressed as exposed without being wound around the glass fiber tape 400a, however, this is for convenience of explanation, and the entire area of the fire resistant silicone layer 300 may be surrounded by the glass fiber tape 400a.

The glass fiber tape 400a can protect the fire resistant silicone layer 300 from flame. That is, the glass fiber tape 400a completely surrounds the fire resistant silicone layer 300, and can temporarily protect the fire resistant silicone layer 300 from flames generated inside the battery pack.

Furthermore, the glass fiber tape 400a can supplement the structural rigidity of the busbar 200 and the fire resistant silicone layer 300 to improve the insulation performance of the busbar 200. Specifically, when the fire resistant silicone layer 300 is ceramified in a flame or high-temperature environment, the electrical insulation properties of the fire resistant silicone layer 300 can be maintained, but the strength of the fire resistant silicone layer 300 becomes weaker and it may be cracked due to external force. The glass fiber tape 400a can supplement the rigidity of the fire resistant silicone layer 300 and prevent the fire resistant silicone layer 300 from being cracked by external force.

Meanwhile, when the busbar assembly 100 is exposed to flame or reaches a high temperature, gas may be generated from the fire resistant silicone layer 300 and an adhesive layer of the glass fiber tape 400a. Gas generated from the fire resistant silicone layer 300 and the glass fiber tape 400a can accelerate internal flames, impair the structural stability of the busbar assembly 100, and thus adversely affect the insulation performance of the busbar 200. Specifical2ly, if the generated gas is blocked by the tightly attached glass fiber tape 400a and is not discharged, some of the portions wrapped around the glass fiber tape 400a may swell up, and the glass fiber tape 400a may eventually burst and be damaged. If the glass fiber tape 400a is damaged, the fire resistant silicone layer 300 may also collapse without forming a dense structure, ultimately impairing the mechanical rigidity and electrical insulation properties of the busbar assembly 100. In addition, the gas generated from the fire resistant silicone layer 300 and the adhesive layer of the glass fiber tape 400a may contain carbonized components. However, if carbonized components accumulate internally, they have an adverse effect on electrical insulation.

Since the glass fiber tape 400a according to the present embodiment is formed with a plurality of through holes 400H, it is possible to effectively discharge gases generated in the fire resistant silicone layer 300 or the adhesive layer of the glass fiber tape 400a. The busbar assembly 100 according to the present embodiment has a structure in which a glass fiber tape 400a is wound multiple times around the fire resistant silicone layer 300 to ensure insulation and structural stability, and gas generated in a flame situation can be easily discharged through the plurality of through holes 400H in the fire resistant silicone layer 300.

At least one of the through holes 400H1 formed in any one layer 410 of the glass fiber tape 400a may be configured such that the opened portion thereof at least partially overlap with at least one of the through holes 400H2 formed in adjacent other layer 420 of the glass fiber tape 400a. FIGS. 9 and 10 show layers 410 and 420 that overlap in at least partial areas. FIG. 9 shows the state before a partial area between any one layer 410 and the other layer 420 adjacent thereto overlap with each other. FIG. 10 shows the state after a partial area between nay one layer 410 and the other layer 420 adjacent thereto overlap with each other. When the glass fiber tape 400a surrounds the fire resistant silicone layer 300, the through holes 400H1 and 400H2 of the adjacent layers 410 and 420 overlap each other, so that the gas generated inside can be discharged more quickly. The number or density of the through holes 400H formed in the glass fiber tape 400a must be designed in consideration of such a gas discharge path.

Meanwhile, by adjusting the positions of the through holes 400H when the glass fiber tape 400a surrounds the fire resistant silicone layer 300, it is possible to confirm the degree of overlapping between the overlapping layers 410 and 420 of the glass fiber tape 400a. In other words, the through holes 400H can, in addition to discharging gas, function as an indicator that can confirm the overlapping degree of the glass fiber tapes 400a. As an example, when the glass fiber tape 400a is wound so that the through holes 400H located at the center of the glass fiber tape 400a are not seen, the overlapping layers 410 and 420 can be wound so that they overlap by approximately 50%.

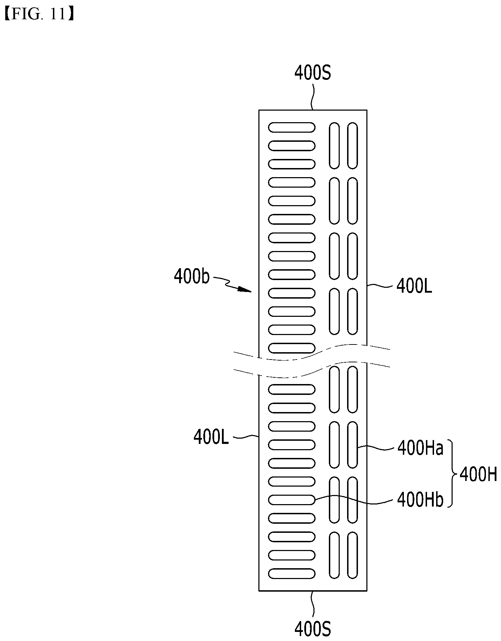

Next, a busbar assembly according to a modified embodiment of the present disclosure will be described in detail with reference to FIGS. 11 to 13.

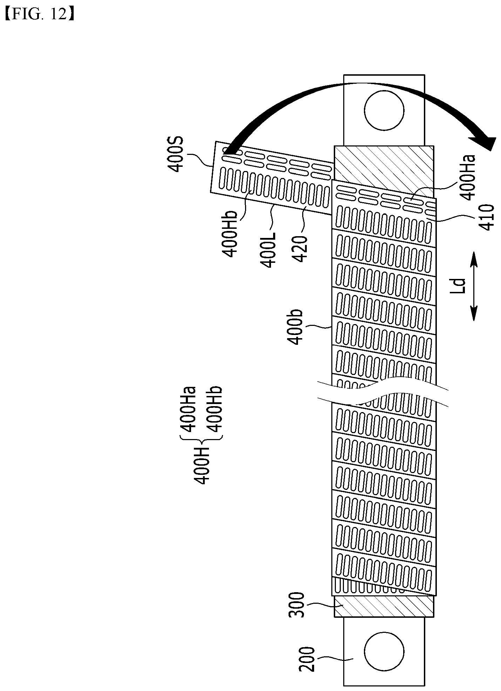

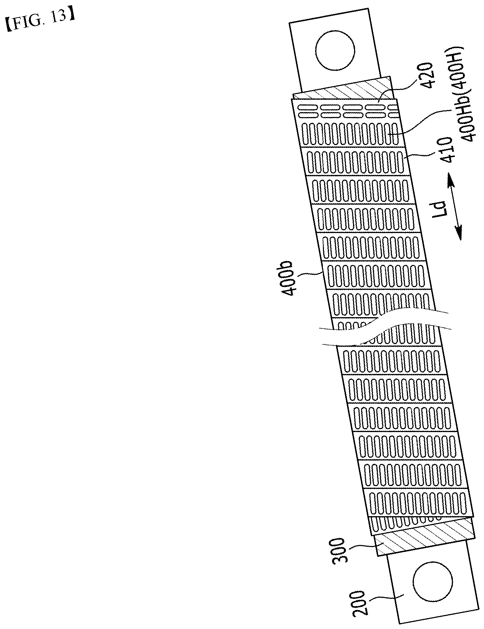

FIG. 11 is a plan view showing a glass fiber tape according to a modified embodiment of the present disclosure. FIGS. 12 and 13 are plan views showing a state in which a fire fiber tape of FIG. 11 is wound around the busbar assembly of FIG. 6. Specifically, FIG. 12 shows the state before the final portion of the glass fiber tape 400b is wound around the fire resistant silicone layer 300. FIG. 13 shows the state in which the final portion of the glass fiber tape 400b is completely wound around the fire resistant silicone layer 300.

Referring to FIGS. 6, 11, 12, and 13 together, the busbar assembly 100 according to an embodiment of the present disclosure includes a busbar 200 for guiding electrical connection inside the battery pack 1000; a fire resistant silicone layer 300 that surrounds an outer peripheral surface of the busbar 200; and a glass fiber tape 400b that surrounds the fire resistant silicone layer 300. The details regarding the busbar 200 and the fire resistant silicone layer 300 are omitted as they overlap with the contents previously described.

The glass fiber tape 400b according to the present embodiment may be a rectangular tape having a long side 400L and a short side 400S, similar to the glass fiber tape 400a described above, and may be formed with a plurality of through holes 400H. However, the glass fiber tape 400b according to the present embodiment is different from the glass fiber tape 400a described above in the shape and arrangement of the through holes 400H.

The through holes 400H according to the present embodiment may include a vertical through hole 400Ha formed so as to extend along a direction parallel to the long side 400L of the glass fiber tape 400b and a horizontal through hole 400Hb formed so as to extend along a direction parallel to the short side 400S of the glass fiber tape 400b. The vertical through hole 400Ha is a hole having a shape in which the width in the direction parallel to the long side 400L of the glass fiber tape 400b is wider than the width in the direction parallel to the short side 400S of the glass fiber tape 400b. The horizontal through hole 400Hb is a hole having a shape in which the width in the direction parallel to the short side 400S of the glass fiber tape 400b is wider than the width in the direction parallel to the long side 400L of the glass fiber tape 400b.

Both the vertical through hole 400Ha and the horizontal through hole 400Hb can be configured in plural numbers, wherein each of the vertical through holes 400Ha and the horizontal through holes 400Hb may be arranged along the long side 400L of the glass fiber tape 400b. As an example, as shown in FIG. 11, the vertical through holes 400Ha may be arranged in two rows along the long side 400L of the glass fiber tape 400b, and the horizontal through holes 400Hb may be arranged in a row along the long sides 400L of the glass fiber tape 400b. The number and width of each of the vertical through hole 400Ha and the horizontal through hole 400Hb may vary depending on the design.

The glass fiber tape 400b may be wound multiple times around the fire resistant silicone layer 300 along the longitudinal direction Ld of the busbar so as to form layers 410 and 420 overlapping in at least partial areas. At this time, at least one vertical through hole 400Ha formed in any one layer 410 of the glass fiber tape 400b, and at least one horizontal through hole 400Hb formed in the other adjacent layer 420 of the glass fiber tape 400b, so that the opened portions thereof may at least partially overlap with each other. FIGS. 12 and 13 illustrate layers 410 and 420 that overlap in at least partial areas. FIG. 12 shows the state before a partial area between any one layer 410 and the other layer 420 adjacent thereto overlap with each other, and FIG. 13 shows the state after a partial area between any one layer 410 and the other layer 420 adjacent thereto overlap with each other. When the glass fiber tape 400b surrounds the fire resistant silicone layer 300, the vertical through hole 400Ha of any one layer 410 and the horizontal through hole 400Hb of the other layer 420 may overlap each other.

In particular, in the case of the present embodiment, since the vertical through hole 400Ha and the horizontal through hole 400Hb, which have a wider width in any one direction, are formed in the glass fiber tape 400b, it is easy to overlap the through holes 400Ha and 400Hb between adjacent layers 410 and 420, and the area overlapping between the through holes 400Ha and 400Hb can be formed to be wider. Thereby, gas can be discharged from the inside of the glass fiber tape 400b to the outside more quickly.

Meanwhile, by adjusting the positions of the through holes 400H when the glass fiber tape 400b surrounds the fire resistant silicone layer 300, it is possible to confirm the degree of overlapping between the overlapping layers 410 and 420 of the glass fiber tape 400b. In other words, the through holes 400H can, in addition to discharging gas, function as an indicator that can confirm the overlapping degree of the glass fiber tapes 400b. As an example, when the glass fiber tape 400b is wound so that the vertical through holes 400Ha of the glass fiber tape 400b are not seen, the overlapping layers 410 and 420 may be wound so that they overlap by approximately 50%.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS (battery management system), a BDU(battery disconnect unit), and a cooling system to form a battery pack.

The battery module or the battery pack can be applied to various devices. Specifically, it can be applied to vehicle means such as an electric bike, an electric vehicle, and a hybrid electric vehicle, or an ESS (Energy Storage System) and may be applied to various devices capable of using a secondary battery, without being limited thereto.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: busbar assembly
200: busbar
300: fire resistant silicone layer
400a, 400b: glass fiber tape
400H, 400H1, 400H2: through hole
400Ha: vertical through hole
400Hb: horizontal through hole
1000: battery pack
1100: pack frame
1200: battery module
1300: BDU module
1400: BMS module

## Claims

1. A busbar assembly comprising:
a busbar for guiding electrical connection inside the battery pack;
a fire resistant silicone layer that surrounds an outer peripheral surface of the busbar; and
a glass fiber tape that surrounds the fire resistant silicone layer,
wherein the glass fiber tape is formed with a plurality of through holes.

2. The busbar assembly as claimed in claim 1, wherein:
the glass fiber tape is wound multiple times along the longitudinal direction of the busbar so as to form layers overlapping in at least partial areas.

3. The busbar assembly as claimed in claim 2, wherein:
the glass fiber tape is wound obliquely multiple times around the fire resistant silicone layer so that partial areas between any one layer in the glass fiber tape and the other layer adjacent thereto overlap with each other.

4. The busbar assembly as claimed in claim 2, wherein:
at least one of the through holes formed in any one layer of the glass fiber tape is configured such that the opened portion thereof at least partially overlap with at least one of the through holes formed in adjacent other layers of the glass fiber tape.

5. The busbar assembly as claimed in claim 1, wherein:
the glass fiber tape is a rectangular tape having a long side and a short side, and
the glass fiber tape surrounds the fire resistant silicone layer along the long side of the glass fiber tape.

6. The busbar assembly as claimed in claim 5, wherein:
the through holes include a vertical through hole formed so as to extend along a direction parallel to the long side of the glass fiber tape and a horizontal through hole formed so as to extend along a direction parallel to the short side of the glass fiber tape.

7. The busbar assembly as claimed in claim 6, wherein:
both the vertical through hole and the horizontal through hole are configured in plural numbers, and
each of the vertical through holes and the horizontal through holes is arranged along the long side of the glass fiber tape.

8. The busbar assembly as claimed in claim 6, wherein:
the glass fiber tape is wound multiple times along the longitudinal direction of the busbar so as to form layers overlapping in at least partial areas, and
at least one of the vertical through hole formed in any one layer of the glass fiber tape, and at least one of the horizontal through holes formed in adjacent other layers of the glass fiber tape are configured such that the opened portions thereof at least partially overlap with each other.

9. The busbar assembly as claimed in claim 1, wherein:
the fire resistant silicone layer includes a silicone material that is ceramified at high temperature.

10. A battery pack comprising:
at least one busbar assembly as claimed in claim 1;
battery modules;
a BDU (battery disconnect unit) module that controls electrical connection of the battery modules; and
a BMS (battery management system) module that monitors and controls the operation of the battery module,
wherein the at least one busbar assembly electrically connects at least one of between the battery modules, between the battery module and the BDU module, between the battery module and the BMS module, or between the BDU module and the BMS module.
